# EUROPÄISCHE PATENTANMELDUNG

(11) **EP 4 520 544 A1**
(43) Veröffentlichungstag der Anmeldung: **12.03.2025**
(21) Anmeldenummer: 24199441.7
(22) Anmeldetag: 10.09.2024
(51) Int. Cl.: B42D 25/324, B42D 25/351, B42D 25/387, B41M 1/10, B41M 3/00, B41M 3/14, C09D 11/033, C09D 11/037, C09D 11/101

(54) **WERTDOKUMENT UND VERFAHREN ZUR HERSTELLUNG EINES WERTDOKUMENTS**

(30) Priorität: 11.09.2023 DE 102023124461
(71) Anmelder: Giesecke+Devrient Currency Technology GmbH, 81677 München (DE)
(72) Erfinder: LUTZENBERGER, Karin, 81677 München (DE); DEPTA, Georg, 81677 München (DE); MENGEL, Christoph, 81677 München (DE); RENNER, Patrick, 81677 München (DE); TANTSCHER, Alexander, 81677 München (DE); WIEDNER, Bernhard, 81677 München (DE); MURVAI, Geza, 81677 München (DE); LESCH, Harald, 81677 München (DE); SEIDLER, Rudolf, 81677 München (DE)
(74) Vertreter: Patentanwälte Geyer, Fehners & Partner mbB

(57) **Zusammenfassung**

Die Erfindung betrifft ein Wertdokument, wie beispielsweise eine Banknote, ein Scheck, eine Kredit- oder sonstige Zahlungskarte, eine Ausweiskarte oder dergleichen. Es weist einen Substratkörper auf, der eine Vorderseite (3) und eine Rückseite (4) hat. Auf der Vorderseite (3) des Substratkörpers (2) ist eine Digitaldruckschicht (6) aufgebracht, welche mit einer Tinte als Farbannahmeschicht ausgebildet ist. Auf die Digitaldruckschicht (6) ist ein Stichtiefdruck (8) mit einer Stichtiefdruckfarbe aufgebracht, wobei der Stichtiefdruck entweder im Passer zur Digitaldruckschicht aufgebracht ist, oder der Stichtiefdruck von der darunterliegenden Digitaldruckschicht zu einem gemeinsamen Motiv ergänzt wird.

## Beschreibung

Die Erfindung bezieht sich auf ein Wertdokument, wie eine Banknote, einen Scheck, ein Ausweisdokument oder dergleichen, das einen Substratkörper aufweist, der eine Vorder- und eine Rückseite hat. Das Wertdokument weist außerdem eine Digitaldruckschicht auf, welche als Farbannahmeschicht auf die Vorderseite des Substratkörpers aufgedruckt ist.

Solche Sicherheitselemente sind aus der WO 2010/058026 A2 bekannt. Dort werden mittels beliebiger Drucktechniken aufgedruckte Farbannahmeschichten, sogenannte Primer-Schichten, für ein magnetisch ausgerichtetes optisch variables Siebdruckfeature zur Beeinflussung der optischen Eigenschaften beschrieben.

Bei bekannten Digitaldruckverfahren wird ein Druckbild direkt aus einer Datei in einer Steuereinheit in eine Druckmaschine übertragen. Im Digitaldruckverfahren wird also keine statische Druckform benötigt. Arten der Digitaldruckverfahren sind beispielsweise Elektrofotografie, Laserdruck oder Tintenstrahldruck. Allen Arten ist es gemein, dass das Druckbild mit geringem mechanischem Druck bzw. beispielsweise beim Tintenstrahldruck sogar kontaktlos übertragen wird (non-impact printing).

Der Stichtiefdruck - auch Intagliodruck genannt - findet im Banknotendruck Anwendung. Allerdings kämpft eine Tiefdruckmaschine mit mehreren Problemen: Der Farbverbrauch einer Tiefdruckmaschine ist sehr hoch, u. a. wegen der Technik zur Einfärbung/Entfernung überschüssiger Farbe durch Wischzylinder etc. Viel Farbe wird aber auch durch einen hohen Farbauftrag bei der Tiefdrucktechnik verbraucht, da es aufgrund von variierenden Substratoberflächen zur mangelnden Farbhaftung des Stichtiefdrucks auf dem Substrat kommt, und dadurch kann der sogenannte Waschmaschinentest - ein wichtiges Indiz für die Umlaufbeständigkeit - nicht bestanden werden. Dies ist ein Indiz dafür, dass sich Probleme im Umlauf durch mangelnde Beständigkeit zeigen würden. Auch Fehlstellen, sogenannte Hohldruckstellen, die z. B. bei speziellen großen Sicherheitselementen auftreten können, erfordern bisher häufig eine hohe Druckbeistellung, was jedoch den Verschleiß der Aufzüge der Druckzylinder erhöht.

Die DE 10 2020 100 442 A1 offenbart eine Tiefdruckmaschine mit speziellen Druckköpfen am Druckzylinder, welche für einen Digitaldruck geeignet sind. Die Druckköpfe sind nach dem Druckvorgang, und/oder an einem Formzylinder, der die Druckplatten trägt, also vor dem Druckvorgang, vor der Einfärbung durch den Schablonenzylinder, angeordnet. Gemäß dieser Druckschrift liegt die Digitaldruckschicht also immer oben auf einem Stichtiefdruck, der folglich von der Digitaldruckschicht unterfüttert ist. Das übertragene Fluid wird dann durch UV-Strahlung getrocknet. Die Digitaldruckschicht soll die bedruckten Substratbögen vor Fehlern durch ein Ablegen von Druckfarbe schützen und eine größere Stapelhöhe in der Auslage erlauben.

Aus der DE 10 2005 052562 A1 ist ein Sicherheitselement bekannt, das eine Markierungsstruktur und erhabene Reliefelemente aufweist, wobei die Markierungsstruktur seitlich auf den Reliefelementen zu liegen kommt und damit aus bestimmten Betrachtungswinkeln besonders gut einzusehen ist, sodass ein Kippeffekt entsteht. Das Sicherheitselement kann ganz oder teilweise ohne Druckform hergestellt werden, wobei die Markierungsschicht als Digitaldruckschicht ausgebildet sein kann. Auch hier liegt aber die Markierungsschicht oben auf den Reliefelementen.

Weiter ist es beispielsweise aus der WO 97/17211 oder der DE 10 243863 A1 bekannt, den Stichtiefdruck mit anderen Druckverfahren zu kombinieren. Dabei wird typischerweise in einer ersten Druckmaschine ein Vordruck erzeugt, der dann in der Stichtiefdruckmaschine (Intaglio-Maschine) verprägt wird. Es wird mit festen Druckformen gearbeitet und es muss auf schwankende Passersituationen Rücksicht genommen werden, da es sich um voneinander getrennte Arbeitsschritte an verschiedenen Maschinen handelt.

Es ist außerdem bekannt, dass bei Druckverfahren, insbesondere Siebdruckverfahren, der Farbverbrauch bei Polymerbankoten oder solchen, die mit dünnen Folien kaschiert sind, mit seinen geschlossenen Oberflächen geringer ist als bei gängigen Papierbanknoten.

Eine immer gestellte Aufgabe ist es, die Fälschungssicherheit eines Wertdokuments zu erhöhen. Dies geschieht in der Praxis vor allem durch komplexe Kombinationen von Druckverfahren. Beispielsweise sind Lumineszenz-Features leicht zu prüfen, aber auch leicht zu fälschen. Am sogenannten Point of Sale wird die Prüfung oft als erfolgreich beurteilt, wenn überhaupt leuchtende Elemente oder zumindest ein bestimmtes Muster zu sehen sind.

Der Erfindung liegt die Aufgabe zugrunde, ein Wertdokument und ein Verfahren zu dessen Herstellung anzugeben, das die Fälschungssicherheit erhöht und gleichzeitig einen geringen Farbverbrauch in der Herstellung sowie eine erhöhte Umlaufbeständigkeit in der Verwendung ermöglicht.

Die Erfindung ist in den unabhängigen Ansprüchen 1 und 10 definiert. Die abhängigen Ansprüche betreffen bevorzugte Weiterbildungen.

Es ist ein Wertdokument, wie eine Banknote, ein Scheck, eine Steuermarke, ein Ausweisdokument oder dergleichen vorgesehen. Das Wertdokument weist einen Substratkörper auf, der eine Vorderseite und eine Rückseite hat. Als Substratkörper können Foliensubstrate, wie beispielsweise PET-Substrate, Papiersubstrate, oder kombinierte Papier- und Foliensubstrate eingesetzt werden.

Auf die Vorderseite des Substratkörpers ist eine Digitaldruckschicht mit einer Tinte aufgedruckt - die Digitaldruckschicht stellt eine Farbannahmeschicht dar. Die Bezeichnung "Farbannahmeschicht" wird verwendet, da die Digitaldruckschicht als vorbereitende Schicht für den darauf aufgebrachten Stichtiefdruck auf den Substratkörper aufgebracht ist. Die Digitaldruckschicht kann bevorzugt geschlossen sein, d.h. eine einer Folienschicht ähnliche glatte Oberfläche aufweisen - sie muss aber nicht geschlossen sein. Die Digitaldruckschicht kann mit dem Stichtiefdruck exakt überlappen, also im Passer aufgebracht sein, sie kann aber auch zu Teilen über den Stichtiefdruck hinausragen, sodass sie ihn zu einem gemeinsamen Motiv ergänzt. Es ist ebenso möglich, dass der Stichtiefdruck über die Digitaldruckschicht hinausragt, wobei sich die beiden Schichten ebenfalls zu einem gemeinsamen Motiv ergänzen. Unter "Tinte" ist im Sinne dieser Anmeldung ein System, welches aus Farbmitteln/Pigmenten und Bindemittel besteht, zu verstehen.

Die für die Digitaldruckschicht verwendeten Tinten lassen sich in drei Hauptkategorien unterteilen: Latextinten, Solvent-/Eco-Solvent-Tinten und UV-härtende Tinten. Latextinten sind wasserbasiert und erfordern keine zusätzliche Belüftung zur Aushärtung - sie sind umweltschonend. Bei Solvent bzw. Eco-Solvent-Tinten werden Farbpigmente mit Hilfe eines Lösungsmittels auf die Vorderseite des Substratkörpers aufgebracht, wo das Lösungsmittel ganz oder teilweise verdunstet. Zurück bleiben die Pigmente, die das Bild erzeugen. Weiter bevorzugt ist die Tinte eine UV-härtende Tinte und/oder enthält einen polaren Anteil. Bei der Strahlenhärtung wird mittels energiereicher Strahlung, z.B. UV-Strahlung aus UV-LEDs, ein reaktives Material von einem niedermolekularen in einen hochmolekularen Zustand versetzt. Dabei findet eine radikalische, eine kationische oder eine dual-cure Härtung statt. Der bevorzugt vorhandene polare Anteil dient der Einstellung einer idealen Oberflächenenergie und stellt damit eine verbesserte Farbhaftung des später aufgebrachten Stichtiefdrucks auf der Digitaldruckschicht sicher. Auf die Digitaldruckschicht ist ein Stichtiefdruck mit einer Stichtiefdruckfarbe aufgebracht.

Räumlich ist die Digitaldruckschicht immer unter dem Stichtiefdruck angeordnet. Die Digitaldruckschicht ist entweder in einem Muster auf die Vorderseite des Substratkörpers aufgebracht und der Stichtiefdruck ist im Passer über diesem Muster aufgebracht, sodass die Umrisse des Musters den Umrissen der Digitaldruckschicht und des Stichtiefdrucks entsprechen, oder die Digitaldruckschicht erstreckt sich über die Umrisse des über ihr angeordneten Stichtiefdrucks hinaus und ergänzt diesen zu einem gemeinsamen Motiv. In letzterer Variante ergibt sich ein bildlicher Zusammenhang zwischen Digitaldruckschicht und Stichtiefdruck, wobei beispielsweise Linien aus dem Stichtiefdruck in der Digitaldruckschicht fortgeführt werden. Auch kann der Stichtiefdruck sich über die Umrisse der Digitaldruckschicht hinaus erstrecken. Auch dann erzeugen beide Schichten ein gemeinsames Motiv, beispielsweise wenn der Stichtiefdruck aufgrund der in Bereichen darunterliegenden Digitaldruckschicht in diesen Bereichen lumineszierende Eigenschaften aufweist und so z.B. leuchtende Augen oder ein erleuchtetes Fenster dargestellt wird. Derartige Kombinationen von Digitaldruckschicht und Stichtiefdruck lassen sich sehr leicht prüfen, sind aber schwer herzustellen und erhöhen damit die Fälschungssicherheit.

Die Digitaldruckschicht ist als Farbannahmeschicht (Primer-Schicht) unter dem Stichtiefdruck auf dem Substratkörper vorgesehen. Dadurch wird eine Glättung der Oberfläche des Substratkörpers erzielt, sodass bevorzugt eine geschlossene Oberfläche vorliegt, und damit einerseits die Beständigkeit des Stichtiefdrucks auf der als Farbannahmeschicht wirkenden Digitaldruckschicht auf einem guten Niveau konstant gehalten (der Waschmaschinentest als beispielhafter Test der physikalischen Beständigkeit verläuft z.B. positiver). Die Digitaldruckschicht als "Unterfütterung" des Stichtiefdrucks kann so zu einem geringeren Farbverbrauch beitragen.

Die Digitaldruckschicht kann in taktile Elemente strukturiert sein, so dass dickere Lackschichten unter taktilen Elementen der Digitaldruckschicht im Passer platziert werden, wodurch eine Gravur in einer Druckplatte nicht mehr so tief sein muss.

Grundsätzlich ist der Passer zwischen unterschiedlichen Druckverfahren eine Herausforderung. Innerhalb der gleichen Maschine aufgebracht, ist dies aber deutlich leichter. Mittels Digitaldrucktechnik, insbesondere Tintenstrahldruck (Ink-Jet), besteht noch dazu die Möglichkeit, durch individuell gesteuerten Passer bezüglich weiteren Druckverfahren die Sicherheit zu erhöhen. Diese individuelle Steuerung lässt sich z.B. anhand von Kameraaufnahmen des Substratkörpers vor der Ink-Jet-Bedruckung (oder während des Anlaufens auch nach der Ink-Jet-Bedruckung) durchführen. Dies funktioniert nur bei "kontaktlosen" Digitaldrucktechniken, denn hier besteht je nach verwendeter Technologie die Möglichkeit, in Sekundenbruchteilen bestimmte Düsen an- oder abzuschalten oder den Tintenstrahl an eine leicht verschobene Stelle zu lenken, und damit die Passgenauigkeit zu verbessern, was besonders bevorzugt sogar in einem Regelkreis realisiert sein kann.

Auf dem Druckzylinder einer Tiefdruckmaschine sind grundsätzlich drei Stichplatten montiert. Diese können einen kleinen Versatz zueinander haben. Durch die positionsgenaue Ansteuerung des Ink-Jet-Aggregats ist es möglich, diese Schwankungen/Ungenauigkeiten des Stichtiefdrucks durch die Digitaldruckschicht auszugleichen und damit Passgenauigkeit und Fälschungssicherheit zu erhöhen. Beim Maschinendurchlauf im Stichtiefdruck kommt es außerdem zu einer leichten trapezförmigen Verformung des Substratkörpers. Mittels des individuell anpassbaren Digitaldruckschicht lässt sich mit dieser Technik an allen Stellen des Substratkörpers die Passerhaltigkeit erreichen, d.h. die übereinander angeordneten Schichten lassen sich exakt im Passer aufbringen. Durch die Kombination der beiden Drucktechniken Digitaldruck und Stichtiefdruck lassen sich daher weitere Beispiele realisieren:
Das Muster der Digitaldruckschicht und des Stichtiefdrucks können z. B. so gewählt werden, dass ein "Zielscheibeneffekt" zwischen beiden Mustern erkennbar ist. Der Passer ist also hier wieder von großer Bedeutung, allerdings ist die Überdeckung der beiden Schichten unterschiedlich. Durch unterschiedliche Farbkomponenten in der Tinte der Digitaldruckschicht können auch Matt-Glanz-Effekte genutzt werden und der Einsatz von lumineszierenden Ink-Jet-Farben lässt in Abstimmung mit dem Muster des Stichtiefdrucks interessante Effekte zu, wie z. B. blitzende Augen oder glitzernder Schmuck als Bestandteil eines Portraits, leuchtende Fenster in einem Gebäude, etc. Wegen der unter dem Stichtiefdruck liegenden Digitaldruckschicht lassen sich Stichtiefdruck-Elemente mit Hilfe von Effektfarben aufwerten, ohne dass diese der Druckfarbe des Stichtiefdrucks beigemischt werden müssen und dann zu großen Teilen durch den Wischvorgang wieder verworfen werden. Bei den Effektfarben kann es sich insbesondere um Farben mit Lumineszenz durch HPP-Pigmente (High Performance Pigments) oder maschinenlesbare IR-Farben wie Sicpa TALK handeln, aber auch Perglanz-Farbwechsel- oder Glitzereffekte kommen in Frage.

Alle Ausführungsformen können individualisiert werden. D. h. eine nachfolgende Zifferung, die ein Beispiel für eine Individualisierung ist, kann durch den Stichtiefdruck oder durch die Digitaldruckschicht mit dem Stichtiefdruck in Kombination erreicht werden. Oder der Digitaldruck weist eine grafische Kodierung auf, welche bei Beleuchtung mit Strahlung aus dem UV-Bereich luminesziert, und im gesamten sichtbaren Spektralbereich transparent ist.

Eine weitere Möglichkeit ist eine Stichtiefdruckfarbe, die im gesamten sichtbaren Spektralbereich transparent ist, sodass die lumineszierenden Eigenschaften der Tinte beeinflusst und/oder ergänzt werden. Die Tinte kann auch Pigmente enthalten, welche Metallic-Effekte erzeugen und den Stichtiefdruck ergänzen. Ein weiteres Beispiel für eine Ausführungsform ist folgendes Lumineszenz-Feature: Zunächst wird die Digitaldruckschicht als Untergrund für den Stichtiefdruck in einem ersten Muster aufgebracht, das lumineszierend ist. Darüber wird der Stichtiefdruck in einem Stichmotiv mit einer transparenten Stichtiefdruckfarbe aufgebracht, welche die darunterliegende Lumineszenz der Digitaldruckschicht beeinflusst. Dies führt z. B. zu einer Abschwächung, im Sinne einer Halbtonmodellierung. Alternativ kann die transparente Stichtiefdruckfarbe mit einer weiteren Lumineszenz ausgestaltet sein, so dass noch eine weitere Farbe unter UV-Anregung erscheint (additive Farbmischung).

Besonders bevorzugt weist die Digitaldruckschicht mit dem menschlichen Auge nicht sichtbare Elemente auf, die den Stichtiefdruck ergänzen. Dabei kann die verwendete Tinte für das menschliche Auge nicht oder kaum wahrnehmbare Stoffe enthalten, die nur mit speziellen Sensoren erfasst und ausgewertet werden können. Es handelt sich um rein maschinenlesbare Merkmale. Dazu gehören Stoffe mit magnetischen Eigenschaften, Absorption im IR-Bereich, oder einer besonderen spektralen Antwort auf eingehende Lichtsignale.

Die Digitaldruckschicht kann auch einfach als zusätzliche Farbschicht für das Motiv im Stichtiefdruck verwendet werden, z. B. durch weitere Linien innerhalb der schon vorhandenen oder im Passer als Untergrund zur Änderung des Farbeindrucks. Auch dabei sind Individualisierungen ohne die Notwendigkeit einer Zifferung möglich. Durch entsprechende Farbformulierungen können weitere taktile Elemente hinzugefügt werden. Außerdem kann die Digitaldruckschicht auch für das menschliche Auge nicht oder kaum wahrnehmbare Elemente zum Stichtiefdruck hinzufügen, die als "digitales Wasserzeichen" ein weiteres Echtheitsmerkmal mit oder ohne Individualisierungen erlauben. Eine nahezu Unsichtbarkeit der Digitaldruckschicht bzw. der Tinte für z. B. Lumineszenz- oder Maschinenfeatures kann durch Transparenz, eine dem Papiereindruck entsprechende Mattigkeit und/oder durch eine der Papierfärbungen entsprechende Einfärbung erreicht werden.

In Abgrenzung zu bisher bekannten Wertdokumenten ist mit Hilfe des Digitaldrucks die Digitaldruckschicht strukturiert aufgebracht. Dieser strukturierte "Vordruck" wird dann im Stichtiefdruck, vorteilhaft mit einer lasierenden Farbführung, so überdruckt, dass die fühlbare Intaglio-Prägung, welche durch den Stichtiefdruck erzeugt wird, zusammen mit der aufgedruckten Struktur ein optisch variables Bild erzeugt, weil die Digitaldruckschicht auf den Erhebungen und/oder den Vertiefungen der Struktur zu liegen kommt, sodass sie auf verschiedenen Seiten der Prägung landet. Besonders vorteilhaft besteht hierbei die Möglichkeit, mit Hilfe einer Kameraüberwachung das aus einem Zusammenwirken der Digitaldruckschicht und des Stichtiefdrucks entstandene Effektbild zu prüfen und gegebenenfalls die Strukturierung der im Digitaldruck vorgedruckten Digitaldruckschicht nachzukorrigieren.

Es sind auch Tinten möglich, die Formulierungen oder Stoffe enthalten, die eine Trocknung bzw. Härtung der Stichtiefdruckfarbe beschleunigen.

Besonders bevorzugt ist die Digitaldruckschicht als Rasterdruck aufgebracht; gegebenenfalls wird die Tinte dabei in "Dots" aufgebracht. Ein derartiger Rasterdruck wird für eine verbesserte Haftung des Stichtiefdrucks genutzt. Falls die Mengen im Ink-Jet gering sind, können auch wasserbasierte Tinten eingesetzt werden. Auch 2K-Systeme oder Zusammensetzungen mit Isocyanaten sind für eine erhöhte Beständigkeit sinnvoll. Für eine verbesserte Farbhaftung der Tinte kommen auch Corona- oder Plasma-Vorbehandlungen in Frage.

Für alle genannten Ausführungsbeispiele ist es von besonderem Vorteil, dass der Passer zwischen Digitaldruck und Stichtiefdruck durch eine oder mehrere Kameras geprüft wird und so durch eine digitale Ansteuerung leicht korrigiert werden kann.

Es versteht sich, dass das beschriebene Aufdrucken der Schichten, obwohl nicht explizit beschrieben natürlich, gleichermaßen auf der Rückseite des Substratkörpers realisiert sein kann. Dann ist das Wertdokument entweder nur an der Vorderseite, nur an der Rückseite oder an Vorder- und Rückseite bedruckt.

Es ist außerdem ein Verfahren zur Herstellung eines bereits beschriebenen Wertdokuments vorgesehen, wobei auf einen Substratkörper, der eine Vorder- und eine Rückseite hat, eine Digitaldruckschicht mit einer Tinte als Farbannahmeschicht auf die Vorderseite des Substratkörpers aufgedruckt wird. Auf die Digitaldruckschicht wird ein Stichtiefdruck mit einer Stichtiefdruckfarbe im Passer aufgebracht. Mit dem Verfahren können alle beschriebenen Ausführungsformen des Wertdokuments hergestellt werden.

Innerhalb einer Stichtiefdruckmaschine gibt es mehrere Möglichkeiten, bauliche Veränderungen bzw. Zusatzeinbauten vorzunehmen, um das beanspruchte Verfahren einfach zu realisieren. In einer Stichtiefdruckmaschine wird vorteilhafterweise ein Ink-Jet-Modul integriert, was dahingehend vorteilhaft ist, dass es sich um ein verhältnismäßig kleines Bauteil handelt - ausreichend Raum hierfür ist an passenden Stellen in der Stichtiefdruckmaschine gegeben. Kameraaufnahmen etc. sind in passender Geschwindigkeit machbar, wobei die Kamera z.B. an einem üblichen Ort einer Ganzbogenkontrolle für den Stich platziert ist.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. In den Figuren zeigen:
- Fig. 1A: ein Wertdokument in einer Schnittdarstellung durch ein Sicherheitsfeature;
- Fig. 1B - 1D: ein aus Digitaldruckschicht und Stichtiefdruck kombiniertes Sicherheitsfeature in Draufsicht, und
- Fig. 2: eine mögliche Implementierung des Verfahrens in eine bestehende Stichtiefdruckmaschine.

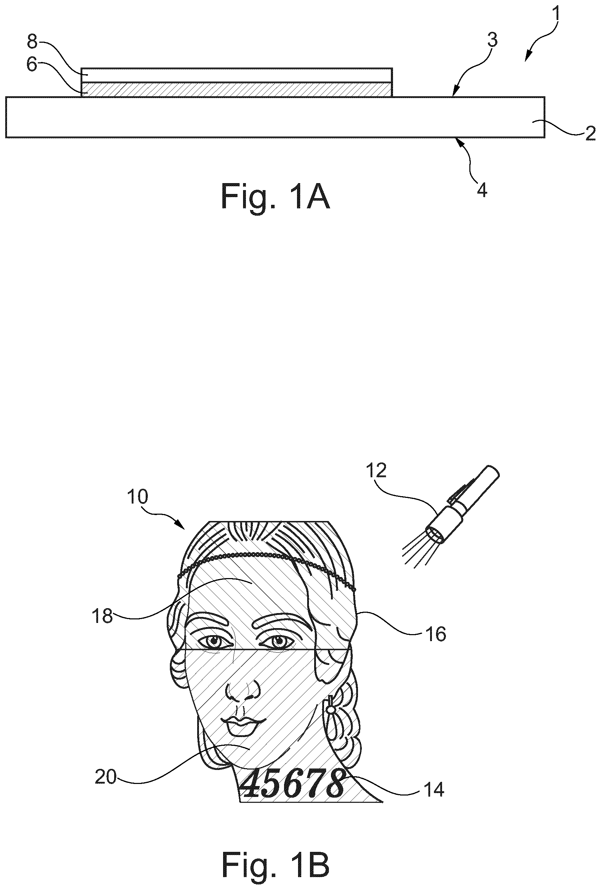

Fig. 1A zeigt ein Wertdokument 1 in Schnittdarstellung. Das Wertdokument 1 weist einen Substratkörper 2, welcher eine Vorderseite 3 und eine Rückseite 4 hat, auf. Auf der Vorderseite 3 des Substratkörpers 2 ist bereichsweise eine Digitaldruckschicht 6 aufgebracht. Auf der Digitaldruckschicht 6 befindet sich ein Stichtiefdruck 8. Die Digitaldruckschicht 6 und der Stichtiefdruck 8 sind im Passer aufgedruckt, so dass ihre Ränder direkt übereinander liegen - sie bilden zusammen ein Sicherheitsfeature 10.

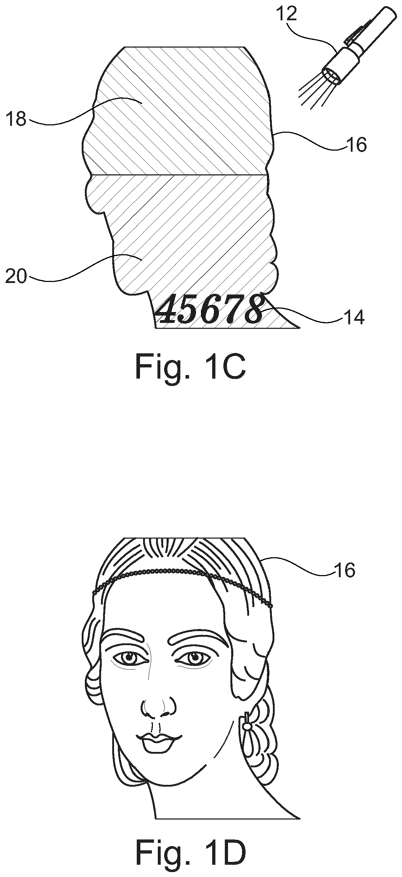

Das Sicherheitsfeature 10 ist in Fig. 1B in Draufsicht dargestellt. Die Fig. 1C zeigt die dem Sicherheitsfeature 10 zugrundeliegende Digitaldruckschicht 6 in Draufsicht und die Fig. 1D zeigt den auf die Digitaldruckschicht 6 aufgebrachten Stichtiefdruck 8 in Draufsicht. Oberhalb der Fig. 1B und 1C sind UV-Strahler 12 angedeutet, welche die lumineszierenden Eigenschaften der Digitaldruckschicht 6 sichtbar machen.

Zunächst wird mittels digitaler Drucktechnik, bspw. Tintenstrahldruck (Ink-Jet) die zweifarbige Abbildung (gezeigt in Fig. 1C) an einer mit dem späteren Stichmotiv abgestimmten und gegebenenfalls über Kameras nachgeregelten Zielstelle in einem gewünschten Motiv (hier in den Konturen eines Portraits 16) als Digitaldruckschicht 6 aufgedruckt. Dieser Digitaldruck ermöglicht vorteilhafterweise eine Individualisierung, z. B. eine Zifferung 14 oder darüber hinaus auch beliebige anderweitige Motive, wie z. B. das Portrait 16, Texte, Jahreszahlen, Tiere, Gegenstände oder Kodierungen wie Strich und 2D-Codes. Derartige grafische Kodierungen haben den besonderen Vorteil der leichten Maschinenlesbarkeit. In Fig. 1C sind ein erster Teilbereich 18 und ein zweiter Teilbereich 20 vorgesehen, welche in diesem Ausführungsbeispiel gelb und grün unter UV-Licht erscheinen, im Sichtbaren transparent oder kaum sichtbar sind; mittels UV-Strahlung geprüft liefern sie eine zweigeteilte Information - der erste Teilbereich 18 erscheint gelb und der zweite Teilbereich 20 erscheint grün. Dies erhöht die Fälschungssicherheit durch einen überraschenden Effekt. Die Teilbereiche 18, 20 können wie im Ausführungsbeispiel farbig sein und die Anzahl der Teilbereiche 18, 20 kann unterschiedlich gewählt werden; auch können unterschiedliche Farben in den unterschiedlichen Teilbereichen 18, 20 gewählt werden.

Die in Fig. 1C dargestellte Digitaldruckschicht 6 dient als Farbannahmeschicht (Primer Schicht) für den nachfolgenden Stichtiefdruckvorgang. Fig. 1D zeigt den Stichtiefdruck 8, der im Passer, wie in Fig. 1B dargestellt über die Digitaldruckschicht 6 aus Fig. 1C gedruckt wird - beide Schichten (Digitaldruckschicht 6 und Stichtiefdruck 8) zeigen dasselbe Portrait 16 und liegen im Passer, d.h. in ihrem Motiv exakt übereinander. Die Digitaldruckschicht 6 muss dabei nicht jede einzelne Stichlinie des Stichtiefdrucks 8 nachformen, sondern kann vorteilhaft eine Fläche mit Außenkonturen des Stichtiefdrucks 8 beinhalten. In weiteren (nicht explizit dargestellten) Ausführungsformen kann sich die Digitaldruckschicht 6 auch über die Außenkonturen des Stichtiefdrucks 8 hinaus erstrecken, sodass sich die beiden Schichten 6, 8 zu einem gemeinsamen Motiv ergänzen. Auch ist es möglich, dass sich der Stichtiefdruck 8 über die Außenkonturen der Digitaldruckschicht 6 hinaus erstreckt - auch dann ergänzen sich beide Schichten 6,8 zu einem gemeinsamen Motiv. Das sichtbare Bild der überlagerten Schichten 6, 8 im UV-Bereich ist in Fig. 1B gezeigt.

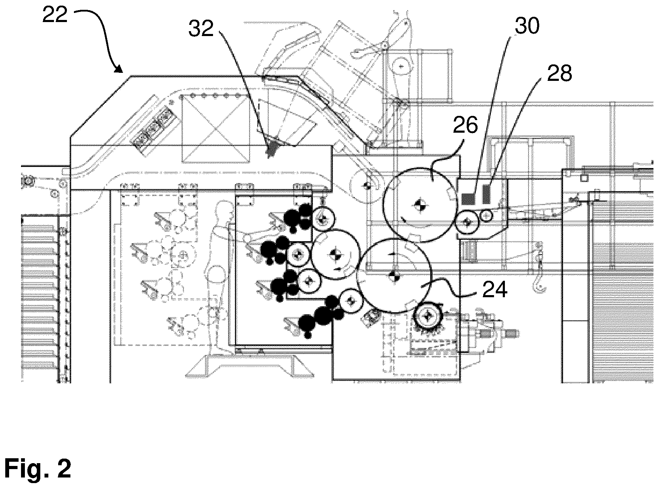

Fig. 2 zeigt eine schematische Darstellung einer Stichtiefdruckmaschine 22. In der Stichtiefdruckmaschine 22 sind ein Schablonenzylinder 24 und ein Druckzylinder 26 angeordnet. In die Stichtiefdruckmaschine 22 wird erfindungsgemäß eine Ink-Jet-Leiste 28, ein UV-LED-Strahler 30 und eine Kamera 32 integriert. Mit der Ink-Jet-Leiste 28 wird die Digitaldruckschicht 6 auf den Substratkörper 2 aufgedruckt. Der UV-LED-Strahler 30 dient zur Trocknung der Digitaldruckschicht 6, woran sich ein Stichtiefdruck (Intaglio-Druck) über den Schablonenzylinder 24 und den Druckzylinder 26 anschließt. Anschließend wird der Passer des Stichtiefdrucks 8 zur Digitaldruckschicht 6 mit der Kamera 32 geprüft. Optional kann dann der Passer durch eine digitale Änderung des Ink-Jet-Ortes an der Ink-Jet-Leiste 28 nachgeregelt werden.

Diese Anordnung stellt nur eine mögliche Integration der Digitaldrucktechnik in eine bestehende Stichtiefdruckmaschine 22 dar - es sind natürlich auch weitere, nicht explizit dargestellte Integrationsmöglichkeiten umfasst. Vorteilhaft an der Integration eines Ink-Jet-Moduls, also der Ink-Jet-Leiste 28 und des UV-LED-Strahlers 30 ist die Tatsache, dass es sich dabei um verhältnismäßig kleine Bauteile handelt. Ausreichend Raum ist hierfür an passenden Stellen in der Stichtiefdruckmaschine 22 gegeben. Die Kameraaufnahmen sind in der passenden Geschwindigkeit machbar - die Kamera 32 sitzt an dem üblichen Ort der Ganzbogenkontrolle für den Stich in der Stichtiefdruckmaschine 22.

Die Ink-Jet-Leiste 28 und der UV-LED-Strahler 30 können auch unter dem Druckzylinder 26, vor dem Kontakt mit dem Schablonenzylinder 24 angebracht sein. Dabei muss der als Bogen ausgeführte Substratkörper 2 geeignet geführt werden, um im Druckzylinder 26 fixiert zu bleiben, da er nur an der Vorderkante gegriffen wird. Dies wird üblicherweise durch Andruckrollen erreicht.

Die Kamera 32 - es können auch mehrere Kameras 32 verwendet werden - kann auch an anderen Orten nach dem Druckvorgang angebracht sein, an denen der Bogen schon mit dem Stichtiefdruck 8 bedruckt und einsehbar ist, frühestens nach dem Kontakt zwischen Druckzylinder 26 und Schablonenzylinder 24 auf dem Druckzylinder 26.

Andere Digitaldruckverfahren, die auf trockenen oder flüssigen Tonern basieren oder Transferbänder einsetzen, erfordern größere Einbauten. Dazu kann die Stichtiefdruckmaschine z. B. zwischen Anleger und Stichtiefdruckwerk ein weiteres Druckwerk mit Trockeneinheit bzw. UV-Strahlern enthalten.

### Bezugszeichenliste

- 1: Wertdokument
- 2: Substratkörper
- 3: Vorderseite
- 4: Rückseite
- 6: Digitaldruckschicht
- 8: Stichtiefdruck
- 10: Sicherheitsfeature
- 12: UV Strahler
- 14: Zifferung
- 16: Portrait
- 18: erster Teilbereich
- 20: zweiter Teilbereich
- 22: Stichtiefdruckmaschine
- 24: Schablonenzylinder
- 26: Druckzylinder
- 28: Ink-Jet-Leiste
- 30: UV-LED-Strahler
- 32: Kamera

## Patentansprüche

1. Wertdokument, wie eine Banknote, ein Scheck, eine Kredit- oder sonstige Zahlungskarte, eine Ausweiskarte oder dergleichen, das aufweist:
- einen Substratkörper, der eine Vorder- und eine Rückseite hat, und
- eine Digitaldruckschicht, welche mit einer Tinte als Farbannahmeschicht auf die Vorderseite des Substratkörpers aufgedruckt ist,
**dadurch gekennzeichnet, dass**
- auf die Digitaldruckschicht ein Stichtiefdruck mit einer Stichtiefdruckfarbe aufgebracht ist, wobei der Stichtiefdruck entweder im Passer zur Digitaldruckschicht aufgebracht ist, oder der Stichtiefdruck von der darunterliegenden Digitaldruckschicht zu einem gemeinsamen Motiv ergänzt wird.

2. Wertdokument nach Anspruch 1, **dadurch gekennzeichnet, dass** die Tinte eine UV-härtende Tinte ist und/oder einen polaren Anteil enthält.

3. Wertdokument nach Anspruch 1, **dadurch gekennzeichnet, dass** die Tinte eine lösemittelbasierte oder wasserbasierte Tinte ist.

4. Wertdokument nach einem der obigen Ansprüche, **dadurch gekennzeichnet, dass** die Digitaldruckschicht eine grafische Kodierung aufweist, welche bei Beleuchtung mit Strahlung aus dem UV-Bereich luminesziert, und im gesamten sichtbaren Spektralbereich transparent ist.

5. Wertdokument nach Anspruch 4, **dadurch gekennzeichnet, dass** die Stichtiefdruckfarbe eine im gesamten sichtbaren Spektralbereich transparente Stichtiefdruckfarbe ist, welche die lumineszierenden Eigenschaften der Tinte beeinflusst und/oder ergänzt.

6. Wertdokument nach einem der obigen Ansprüche, **dadurch gekennzeichnet, dass** die Tinte Pigmente enthält, welche Metallic-Effekte erzeugen und den Stichtiefdruck ergänzen.

7. Wertdokument nach einem der obigen Ansprüche, **dadurch gekennzeichnet, dass** die Digitaldruckschicht mit dem menschlichen Auge nicht sichtbare Elemente aufweist, die den Stichtiefdruck ergänzen.

8. Wertdokument nach einem der obigen Ansprüche, **dadurch gekennzeichnet, dass** die Digitaldruckschicht als Rasterdruck aufgebracht ist.

9. Wertdokument nach einem der obigen Ansprüche, **dadurch gekennzeichnet, dass** die Digitaldruckschicht Stoffe enthält, die eine Trocknung bzw. UV-Härtung der Stichtiefdruckfarbe beschleunigen.

10. Verfahren zur Herstellung eines Wertdokuments nach einem der Ansprüche 1 bis 9, wobei
auf einen Substratkörper, der eine Vorder- und eine Rückseite hat, eine Digitaldruckschicht mit einer Tinte als Farbannahmeschicht auf die Vorderseite des Substratkörpers aufgedruckt wird,
**dadurch gekennzeichnet, dass**
- auf die Digitaldruckschicht ein Stichtiefdruck mit einer Stichtiefdruckfarbe aufgebracht wird, wobei der Stichtiefdruck entweder im Passer zur Digitaldruckschicht aufgebracht wird, oder der Stichtiefdruck von der darunterliegenden Digitaldruckschicht zu einem gemeinsamen Motiv ergänzt wird.
